# EUROPEAN PATENT SPECIFICATION

(11) **EP 3 397 906 B1**
(45) Date of publication and mention of the grant of the patent: **30.12.2020**
(21) Application number: 16882238.5
(22) Date of filing: 08.11.2016
(51) Int. Cl.: B29C 45/16, F25D 23/06, F16L 59/065, B29L 31/00, B29K 23/00

(54) **INJECTION MOLDED GAS BARRIER PARTS FOR VACUUM INSULATED STRUCTURE**
SPRITZGEGOSSENE GASBARRIERETEILE FÜR VAKUUMISOLIERTE STRUKTUR
PIÈCES DE BARRIÈRE CONTRE LES GAZ MOULÉES PAR INJECTION POUR STRUCTURE ISOLÉE SOUS VIDE

(30) Priority: 29.12.2015 US 201514982652
(43) Date of publication of application: 07.11.2018
(73) Proprietor: Whirlpool Corporation, Benton Harbor, MI 49022 (US)
(72) Inventor: ALLARD, Paul B., Benton Harbor Michigan 49022 (US); ALLO, Berhanu, Benton Harbor Michigan 49022 (US); DEKA, Lakshya J., Benton Harbor Michigan 49022 (US); LIU, Hua, Benton Harbor Michigan 49022 (US); MUKHERJEE, Diptesh, Benton Harbor Michigan 49022 (US)
(74) Representative: Spina, Alessandro
(86) International application number: PCT/US2016/060947
(87) International publication number: WO 2017/116564

(56) References cited:
- EP-A1- 0 860 669
- EP-A2- 2 778 582
- WO-A1-99/20964
- WO-A1-2013/155323
- WO-A2-01/60598
- WO-A2-2012/044001
- US-A- 3 993 811
- US-A- 5 082 335
- US-A- 5 273 801
- US-A1- 2013 257 257

## Description

### BACKGROUND OF THE INVENTION

Various types of vacuum insulated refrigerator cabinets and doors have been developed. However, known methods of fabricating vacuum insulated structures may suffer from various drawbacks. ***Document*** US2013/0257257A1 ***discloses a vacuum insulated structure comprising first and second basins. A polymeric barrier films and a heat sealing layer are provided on the first and second basins. The barrier film is disposed upon the first and second basins by laminating the barrier film onto the first and second basins or by co-extruding the barrier film with the first and second basins or by coating the barrier film onto the material used for the first and second basins.***

### SUMMARY OF THE INVENTION

One aspect of the present disclosure is a method of fabricating a vacuum insulated refrigerator structure. The method includes injection molding a first layer of a first polymer material. A second layer of a second polymer material is injection molded over at least a portion of the first layer, and a third layer of a third polymer material is injection molded over at least a portion of the second layer to form a first component such as a liner or a wrapper. A second component is secured to the first panel component to form a vacuum cavity therebetween. The vacuum cavity is filled with a porous material, and the vacuum cavity is evacuated to form a vacuum. At least one of the first and third layers includes a structural reinforcement such as a rib or screw boss of increased thickness that is formed during the injection molding process.

These and other features, advantages, and objects of the present disclosure will be further understood and appreciated by those skilled in the art by reference to the following specification, claims, and appended drawings.

### BRIEF DESCRIPTION OF THE DRAWINGS

FIG. 1 is an isometric view of a refrigerator;
FIG. 2 is an exploded isometric view of a refrigerator cabinet;
FIG. 3 is an exploded isometric view of a refrigerator door;
FIG. 4 is an isometric view of a door liner showing the inner ride of the door liner;
FIG. 5 is a cross sectional view of the door liner of FIG. 4 taken along the line V-V;
FIG. 6 is a partially fragmentary isometric view showing an injection molded structural reinforcement feature;
FIG. 7 is a partially schematic view of a mold utilized for a first injection;
FIG. 8 is a partially schematic view of a mold utilized for a second injection;
FIG. 9 is a partially schematic view of a mold utilized for a third injection; and
FIG. 10 is a cross sectional view of a vacuum insulated refrigerator structure according to one aspect of the present invention.

### DETAILED DESCRIPTION

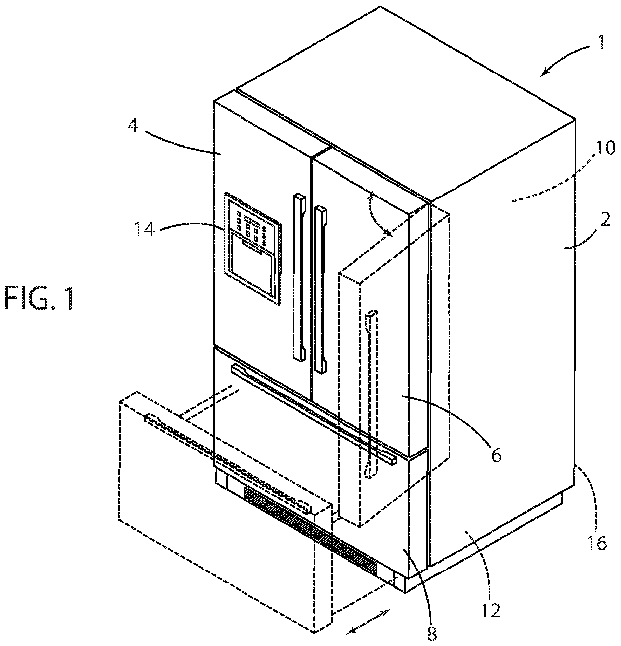

For purposes of description herein, the terms "upper," "lower," "right," "left," "rear," "front," "vertical," "horizontal," and derivatives thereof shall relate to the disclosure as oriented in FIG. 1. However, it is to be understood that the disclosure may assume various alternative orientations and step sequences, except where expressly specified to the contrary. It is also to be understood that the specific devices and processes illustrated in the attached drawings, and described in the following specification, are simply exemplary embodiments of the concepts defined in the appended claims. Hence, specific dimensions and other physical characteristics relating to the disclosures herein are not to be considered as limiting, unless the claims expressly state otherwise.

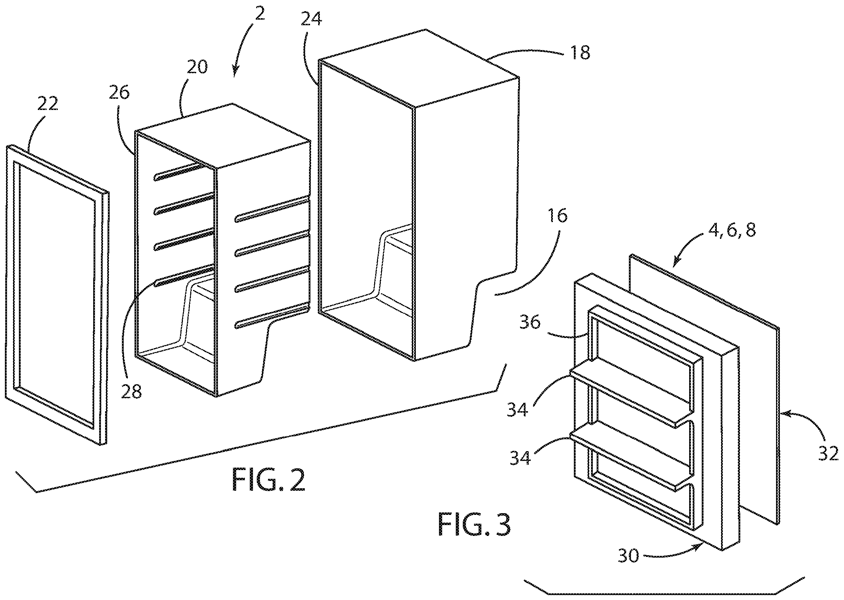

With reference to FIG. 1, a refrigerator 1 may include a vacuum insulated cabinet structure 2, and one or more doors 4 and 6 that are movably mounted to the cabinet 2. The cabinet 2 may include an insulated fresh food compartment 10 that is accessible by opening doors 4 and 6, and a frozen food compartment 12 that can be accessed by opening drawer 8. Refrigerator 1 may also include an ice/water dispenser 14 mounted to door 4. Refrigerator 1 includes a cooling system (not shown) that may be mounted in a machine space 16 (see also FIG. 2) located in a lower rear portion of the refrigerator 1. The cooling system may comprise a compressor, condenser, evaporator, and other related components. Alternatively, the cooling system may comprise a thermoelectric system that utilizes thermoelectric elements.

With further reference to FIG. 2, cabinet 2 may comprise an outer wrapper 18 and an inner liner 20 that fits within the wrapper 18 when assembled. A trim breaker 22 may be utilized to seal front edge 24 of wrapper 18 to front edge 26 of liner 20. The wrapper 18 and/or liner 20, and/or trim breaker 22 may comprise multi-layer polymer structures that are impervious to atmospheric gasses such as oxygen, nitrogen, carbon dioxide, water vapor, and/or other gasses. These multi-layer structures may be formed utilizing a multistep injection molding process discussed below. Alternatively, only one or two of the components 18, 20, and 22 may be fabricated utilizing a multistep injection process. For example, wrapper 18 could comprise formed sheet metal, and liner 20 and trim breaker 22 could comprise a multilayer polymer structure. Various features such as ribs or raised portions 28 may be formed in liner 20, wrapper 18, and/or trim breaker 22 during the injection molding process as described in more detail below. As discussed in more detail below, the liner 20 and exterior wrapper 18 form an interior space or cavity between liner 20 and wrapper 18 when assembled, and the interior cavity is filled with a porous material. The cavity is then evacuated to form a vacuum insulated structure.

With further reference to FIG. 3, the doors 4 and 6 and/or drawer 8 may include a liner 30 and exterior wrapper or panel 32. The door liner 30 and exterior panel 32 may comprise multi-layer polymer structures that are impervious to gasses. These structures may be fabricated according to a process discussed below. Liner 30 may comprise shelves 34, raised reinforcing features 36, or other such three dimensional features that are formed during an injection molding process.

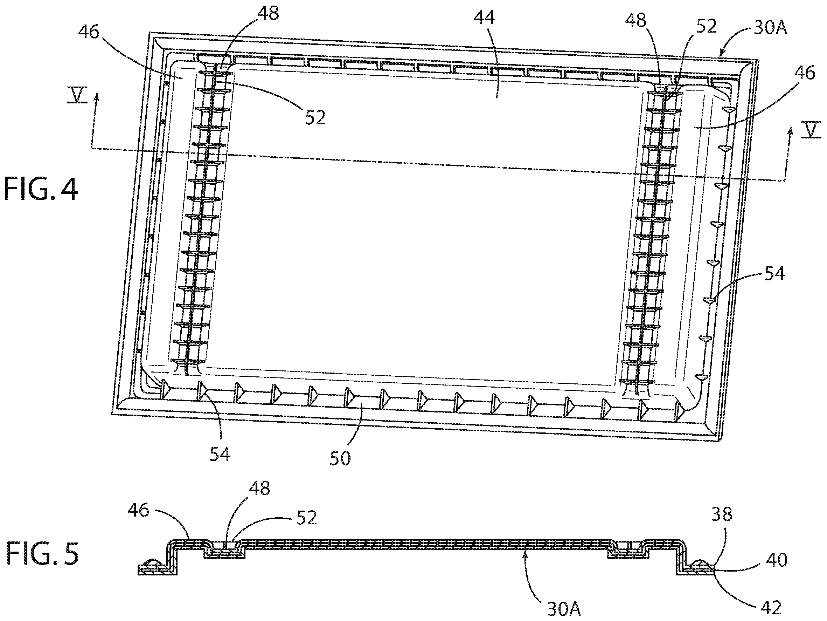

With further reference to FIGS. 4 and 5, a liner 30A includes first, second, and third layers of polymer material 38, 40, and 42, respectively. The first layer 38 may form an interior side 44 of liner 30A. Layer 38 may include raised portions 46, grooves or lower portions such as linear channels 48, a perimeter channel 50, and reinforcing ribs 52 and 54 that extend across the grooves 48 and perimeter channel 50, respectively. As discussed below, an injection molding process according to the present disclosure provides for formation of complex three dimensional features such as raised portions 46, grooves and channels 48 and 50, respectively, and ribs 52 and 54, respectively.

In a liner or other component according to the present disclosure, the first layer 38 and third layer 42 may comprise a nylon thermoplastic material, and the second layer 40 may comprise a relatively thin layer of Ethylene Vinyl Alcohol (EVOH). According to another aspect of the present disclosure, a liner 30A or other component may include a first layer 38 and third layer 42 that comprise a High Impact Polystyrene (HIPS), and the second layer 40 may comprise a relatively thin layer of EVOH. In general, EVOH is a good barrier to oxygen, but it is not a particularly good barrier with respect to water vapor. Accordingly, one or both of the layers 38 and/or 42 may comprise a material that provides a water vapor barrier. For example, layer 38 and/or layer 42 could comprise barrier nylon or a liquid crystal polymer. Alternatively, a fourth layer (not shown) of material such as Tetrafluoroethylene (THV), polychlorotrifluoroethylene (PCTFE), Cyclic Olefin Copolymer (COC), Cyclic Olefin Polymer (COP) or high density polyethylene (HDPE) providing a water vapor barrier may be injection molded between layers 38 and 40 or between layers 40 and 42. In general, the materials utilized to form layers 38, 40, 42 and/or additional layers may be chosen to provide specific barrier properties with respect to oxygen transmission, water vapor transmission, structural properties, and cost considerations.

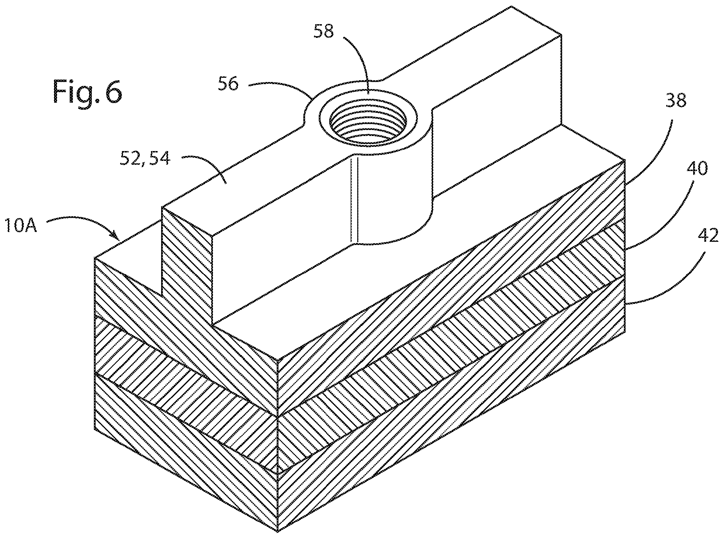

With further reference to FIG. 6, the component 10A may be molded to include additional structural features such as a screw boss 56 that receives a threaded insert 58. The ribs 52, 54 and/or screw boss 56 or other such features may be formed by injection molding at the time first and/or third layers 38 and 42 are being formed. It will be understood that a wide range of three dimensional features may be formed during the injection molding process whereby layer 38 and/or 42 have a non-uniform thickness.

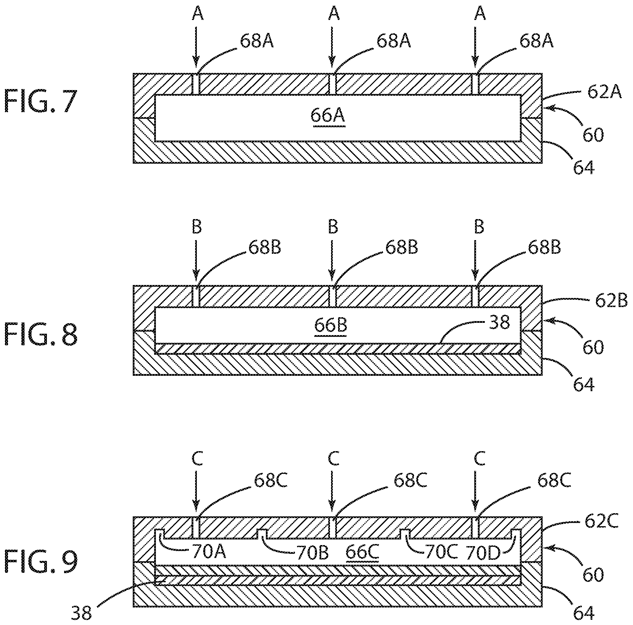

With further reference to FIGS. 7-9, a molding tool 60 includes a lower mold part 64, and first, second, and third upper parts 62A, 62B, and 62C, respectively. During a first molding step (FIG. 7), molten polymer material is injected through ports 68A in mold part 62A as shown by the arrows "A." The molten material flows into a first mold cavity 66A defined by mold parts 62A and 64 to form a first layer 38 (FIG. 8). After the first polymer material is injected, additional polymer material is injected through ports 68B as shown by the arrows "B" (FIG. 8) to fill a second cavity 66B defined by mold tools 62B and 64 to form a second layer 40 (FIG. 9) that extends over at least a portion of first layer 38. With further reference to FIG. 9, a third polymer material is then injected through ports 68C of mold part 62C as shown by the arrows "C" to fill cavity 66C and form a third layer 42 (see also FIGS. 5 and 6). The mold part 62C may include one or more cavities or other features 70A-70D that form ribs 52, 54 and/or screw bosses 56 and/or other such 3D features whereby the component formed by the tooling/process of FIGS. 7-9 has a non-uniform thickness. The mold part 64 may also include one or more cavities or other such features that are similar to the features 70A-70D to thereby form three dimensional features in first layer 38.

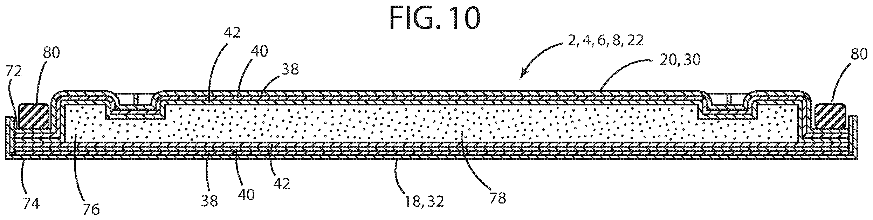

With further reference to FIG. 10 a vacuum insulated refrigerator structure such as a cabinet 2, doors 4, 6, and/or drawer 8, and/or a trim breaker 22 may include an outer component such as wrapper 18 or exterior panel 32, and an interior liner 20 or 30. The components 18, 20, 30, and/or 32 may comprise three or more layers of polymer material 38, 40, and 42 that are configured to provide a barrier to gas as discussed above. During assembly, perimeter edge portions or flanges 72 and 74 of the wrapper 18 and liner 20 are sealed together to form an interior space 76. The interior space 76 is then filled with silica powder 78 or other suitable material, and a vacuum is formed in the interior space 76. The vacuum may be formed by placing the assembled structure in a vacuum chamber (not shown), and an access opening or port in wrapper 18 and/or liner 20 may then be closed and sealed to seal off interior space 76. The assembly is then removed from the vacuum chamber. Once the interior space 76 is sealed, the vacuum assembly forms a vacuum insulated refrigerator structure such as cabinet 2, doors 4, 6, drawer 8, or other such refrigerator structure. If the structure comprises a refrigerator cabinet 2, a trim breaker 22 may be utilized to seal edge 24 of wrapper 18 to edge 26 of liner 20 as discussed above in connection with FIG. 2. If the vacuum insulated refrigerator structure comprises a door, a resilient seal strip 80 or the like may be positioned adjacent edge portions 72 and 74 to thereby seal the door 4 or 6 (or drawer 8) when in a closed position.

It is to be understood that variations and modifications can be made on the aforementioned structure without departing from the concepts of the present disclosure, and further it is to be understood that such concepts are intended to be covered by the following claims unless these claims by their language expressly state otherwise.

## Claims

1. A method of fabricating a vacuum insulated refrigerator structure (2), the method comprising:
injection molding a first layer (38) of a first thermoplastic polymer material;
injection molding a second layer (40) of a second thermoplastic polymer material over at least a portion of the first layer (38);
injection molding a third layer (42) of a third thermoplastic polymer material over at least a portion of the second layer (40) to form a first component (18, 20, 22);
securing a second component (18, 20, 22) to the first component (18, 20, 22) to form a vacuum cavity (76) therebetween;
filling the vacuum cavity (76) with a porous material (78);
evacuating the vacuum cavity (76);
wherein at least one of the first and third layers (38, 42) includes at least one structural reinforcement (28, 52, 54, 56) of increased thickness formed during the injection molding process, and wherein at least one of the first, second, and third polymer materials is impervious to at least one atmospheric gas.

2. The method of claim 1, wherein:
the structural reinforcement comprises a rib (52, 54).

3. The method of claim 1 or claim 2, wherein:
the structural reinforcement comprises a screw boss (56).

4. The method of any of claims 1-3, wherein:
the second layer (40) comprises EVOH.

5. The method of any of claims 1-4, wherein:
the second layer (40) is thinner than the first and third layers (38, 42).

6. The method of any of claims 1-5, wherein:
at least one of the first and third layers (38, 42) comprises a nylon material.

7. The method of any of claims 1-5, wherein:
at least one of the first and third layers (38, 42) comprises a HIPS material.

8. The method of any of claims 1-7, wherein:
the first component comprises a refrigerator cabinet liner (20), and the second component comprises a refrigerator cabinet wrapper (18).

9. The method of any of claims 1-8, wherein:
the first component is formed by injection molding at least one of the first, second, and third layers (38, 40, 42) of the thermoplastic polymer materials.

10. The method of any of claims 1-9, wherein:
at least one of the first, second, and third layers (38, 40, 42) is impervious to at least one atmospheric gas.

11. A vacuum insulated refrigerator structure (2), comprising:
a first layer (38) of a first thermoplastic polymer material;
a second layer (40) of a second thermoplastic polymer material molded to at least a portion of the first layer (38);
a third layer (42) of a third thermoplastic polymer material molded to at least a portion of the second layer (40) to form a first component (18, 20, 22);
a second component (18, 20, 22) secured to the first component to form a vacuum cavity (76) therebetween;
filler material (78) disposed in the vacuum cavity (76), wherein the vacuum cavity (76) is evacuated; and
wherein at least one of the first, second, and third polymer materials is impervious to at least one of oxygen, nitrogen, and water vapor,
**characterised in that** at least one of the first and third layers (38, 42) includes at least one integrally molded structural reinforcement (28, 52, 54, 56) of increased thickness.

12. A vacuum insulated refrigerator structure according to claim 11, wherein:
the structural reinforcement comprises a rib (28, 52, 54).

13. A vacuum insulated refrigerator structure according to claim 11 or claim 12, wherein:
the structural reinforcement comprises a screw boss (56).

14. A vacuum insulated refrigerator structure according to any of claims 11-13 wherein:
the vacuum insulated refrigerator structure comprises a refrigerator cabinet (2) or a refrigerator door (4, 6).

15. A vacuum insulated refrigerator structure according to any of claims 11-14, wherein:
the vacuum insulated refrigerator structure comprises an ice dispenser housing.

## Patentansprüche

1. Verfahren zur Herstellung einer vakuumisolierten Kühlschrankstruktur (2), das Verfahren umfassend:
Spritzgießen einer ersten Schicht (38) eines ersten thermoplastischen Polymermaterials;
Spritzgießen einer zweiten Schicht (40) eines zweiten thermoplastischen Polymermaterials über mindestens einem Teil der ersten Schicht (38);
Spritzgießen einer dritten Schicht (42) eines dritten thermoplastischen Polymermaterials über mindestens einem Teil der zweiten Schicht (40), um eine erste Komponente (18, 20, 22) zu bilden;
Befestigen einer zweiten Komponente (18, 20, 22) an der ersten Komponente (18, 20, 22), um einen Vakuumhohlraum (76) dazwischen zu bilden;
Füllen des Vakuumhohlraums (76) mit einem porösen Material (78);
Evakuieren des Vakuumhohlraums (76);
wobei mindestens eine der ersten und dritten Schicht (38, 42) mindestens eine strukturelle Verstärkung (28, 52, 54, 56) erhöhter Dicke beinhaltet, die während des Spritzgussprozesses gebildet wird, und wobei mindestens eines des ersten, zweiten und dritten Polymermaterials für mindestens ein atmosphärisches Gas undurchlässig ist.

2. Verfahren nach Anspruch 1, wobei:
die strukturelle Verstärkung eine Rippe (52, 54) umfasst.

3. Verfahren nach Anspruch 1 oder Anspruch 2, wobei:
die strukturelle Verstärkung einen Schraubdom (56) umfasst.

4. Verfahren nach einem der Ansprüche 1-3, wobei:
die zweite Schicht (40) EVOH umfasst.

5. Verfahren nach einem der Ansprüche 1-4, wobei:
die zweite Schicht (40) dünner als die erste und dritte Schicht (38, 42) ist.

6. Verfahren nach einem der Ansprüche 1-5, wobei:
mindestens eine der ersten und dritten Schicht (38, 42) ein Nylonmaterial umfasst.

7. Verfahren nach einem der Ansprüche 1-5 , wobei:
mindestens eine der ersten und dritten Schicht (38, 42) ein HIPS-Material umfasst.

8. Verfahren nach einem der Ansprüche 1-7, wobei:
die erste Komponente eine Kühlschrankfachauskleidung (20) umfasst und die zweite Komponente eine Kühlschrankfachumhüllung (18) umfasst.

9. Verfahren nach einem der Ansprüche 1-8, wobei:
die erste Komponente durch Spritzguss mindestens einer der ersten, zweiten und dritten Schicht (38, 40, 42) der thermoplastischen Polymermaterialien gebildet ist.

10. Verfahren nach einem der Ansprüche 1-9, wobei:
mindestens eine der ersten, zweiten und dritten Schicht (38, 40, 42) für mindestens ein atmosphärisches Gas undurchlässig ist.

11. Vakuumisolierte Kühlschrankstruktur (2), umfassend:
eine erste Schicht (38) aus einem ersten thermoplastischen Polymermaterial;
eine zweite Schicht (40) aus einem zweiten thermoplastischen Polymermaterial, die an mindestens einem Teil der ersten Schicht (38) geformt ist;
eine dritte Schicht (42) aus einem dritten thermoplastischen Polymermaterial, die an mindestens einem Teil der zweiten Schicht (40) geformt ist, um eine erste Komponente (18, 20, 22) zu bilden;
eine zweite Komponente (18, 20, 22), die an der ersten Komponente befestigt ist, um einen Vakuumhohlraum (76) dazwischen zu bilden;
ein Füllmaterial (78), das in dem Vakuumhohlraum (76) angeordnet ist, wobei der Vakuumhohlraum (76) evakuiert ist; und
wobei mindestens eines des ersten, zweiten und dritten Polymermaterials für mindestens eines von Sauerstoff, Stickstoff und Wasserdampf undurchlässig ist,
**dadurch gekennzeichnet, dass** mindestens eine der ersten und dritten Schicht (38, 42) mindestens eine einstückig geformte strukturelle Verstärkung (28, 52, 54, 56) erhöhter Dicke beinhaltet.

12. Vakuumisolierte Kühlschrankstruktur nach Anspruch 11, wobei:
die strukturelle Verstärkung eine Rippe (28, 52, 54) umfasst.

13. Vakuumisolierte Kühlschrankstruktur nach Anspruch 11 oder Anspruch 12, wobei die strukturelle Verstärkung einen Schraubdom (56) umfasst.

14. Vakuumisolierte Kühlschrankstruktur nach einem der Ansprüche 11-13, wobei:
die vakuumisolierte Kühlschrankstruktur ein Kühlschrankfach (2) oder eine Kühlschranktür (4, 6) umfasst.

15. Vakuumisolierte Kühlschrankstruktur nach einem der Ansprüche 11-14, wobei:
die vakuumisolierte Kühlschrankstruktur ein Eisspendergehäuse umfasst.

## Revendications

1. Procédé de fabrication d'une structure de réfrigérateur isolée sous vide (2), le procédé comprenant les étapes consistant à :
mouler par injection une première couche (38) d'un premier matériau polymère thermoplastique ;
mouler par injection une deuxième couche (40) d'un deuxième matériau polymère thermoplastique sur au moins une partie de la première couche (38) ;
mouler par injection une troisième couche (42) d'un troisième matériau polymère thermoplastique sur au moins une partie de la deuxième couche (40) pour former un premier composant (18, 20, 22) ;
fixer un second composant (18, 20, 22) au premier composant (18, 20, 22) pour former une cavité de vide (76) entre ceux-ci ;
remplir la cavité de vide (76) d'un matériau poreux (78) ;
évacuer la cavité de vide (76) ;
dans lequel au moins une des première et troisième couches (38, 42) inclut au moins un renforcement structural (28, 52, 54, 56) d'épaisseur augmentée formé durant le processus de moulage par injection, et dans lequel au moins un des premier, deuxième et troisième matériaux polymères est imperméable à au moins un gaz atmosphérique.

2. Procédé selon la revendication 1, dans lequel :
le renforcement structural comprend une nervure (52, 54).

3. Procédé selon la revendication 1 ou la revendication 2, dans lequel :
le renforcement structural comprend un bossage pour vis (56).

4. Procédé selon l'une quelconque des revendications 1-3, dans lequel :
la deuxième couche (40) comprend de l'EVOH.

5. Procédé selon l'une quelconque des revendications 1-4, dans lequel :
la deuxième couche (40) est plus fine que les première et troisième couches (38, 42).

6. Procédé selon l'une quelconque des revendications 1-5, dans lequel :
au moins une des première et troisième couches (38, 42) comprend un matériau en nylon.

7. Procédé selon l'une quelconque des revendications 1-5, dans lequel :
au moins une des première et troisième couches (38, 42) comprend un matériau en HIPS.

8. Procédé selon l'une quelconque des revendications 1-7, dans lequel :
le premier composant comprend une doublure d'armoire de réfrigérateur (20), et le second composant comprend un emballage d'armoire de réfrigérateur (18).

9. Procédé selon l'une quelconque des revendications 1-8, dans lequel :
le premier composant est formé en moulant par injection au moins une des première, deuxième et troisième couches (38, 40, 42) des matériaux polymères thermoplastiques.

10. Procédé selon l'une quelconque des revendications 1-9, dans lequel :
au moins une des première, deuxième et troisième couches (38, 40, 42) est imperméable à au moins un gaz atmosphérique.

11. Structure de réfrigérateur isolée sous vide (2), comprenant :
une première couche (38) d'un premier matériau polymère thermoplastique ;
une deuxième couche (40) d'un deuxième matériau polymère thermoplastique moulée sur au moins une partie de la première couche (38) ;
une troisième couche (42) d'un troisième matériau polymère thermoplastique moulée sur au moins une partie de la deuxième couche (40) pour former un premier composant (18, 20, 22) ;
un second composant (18, 20, 22) fixé au premier composant pour former une cavité de vide (76) entre ceux-ci ;
un matériau de remplissage (78) disposé dans la cavité de vide (76), dans laquelle la cavité de vide (76) est évacuée ; et
dans laquelle au moins un des premier, deuxième et troisième matériaux polymères es imperméable à au moins un parmi l'oxygène, l'azote et la vapeur d'eau,
**caractérisée en ce qu'**au moins une des première et troisième couches (38, 42) inclut au moins un renforcement structural intégralement moulé (28, 52, 54, 56) d'épaisseur augmentée.

12. Structure de réfrigérateur isolée sous vide selon la revendication 11, dans laquelle :
le renforcement structural comprend une nervure (28, 52, 54).

13. Structure de réfrigérateur isolée sous vide selon la revendication 11 ou la revendication 12, dans laquelle :
le renforcement structural comprend un bossage pour vis (56).

14. Structure de réfrigérateur isolée sous vide selon l'une quelconque des revendications 11-13, dans laquelle :
la structure de réfrigérateur isolée sous vide comprend une armoire de réfrigérateur (2) ou une porte de réfrigérateur (4, 6).

15. Structure de réfrigérateur isolée sous vide selon l'une quelconque des revendications 11-14, dans laquelle :
la structure de réfrigérateur isolée sous vide comprend un boîtier de distributeur de glace.
